# EUROPÄISCHE PATENTSCHRIFT

(11) **EP 1 117 585 B1**
(45) Veröffentlichungstag und Bekanntmachung des Hinweises auf die Patenterteilung: **17.10.2007**
(21) Anmeldenummer: 00945943.9
(22) Anmeldetag: 21.07.2000
(51) Int. Cl.: B62D 55/26

(54) **KETTENSTEG FÜR LAUFKETTEN**
GROUSER FOR A CRAWLER CHAIN
CRAMPON POUR CHENILLES

(30) Priorität: 30.07.1999 DE 29913344 U
(43) Veröffentlichungstag der Anmeldung: 25.07.2001
(73) Patentinhaber: Kässbohrer Geländefahrzeug AG, 88471 Laupheim (DE)
(72) Erfinder: KANZLER, Helmut, D-89269 Vöhringen (DE)
(74) Vertreter: Patentanwälte Ruff, Wilhelm, Beier, Dauster & Partner
(86) Internationale Anmeldenummer: PCT/EP2000/006998
(87) Internationale Veröffentlichungsnummer: WO 2001/008963

(56) Entgegenhaltungen:
- WO-A-88/02717
- US-A- 5 201 574
- US-A- 5 265 949

## Beschreibung

Die Erfindung betrifft einen Kettensteg für Laufketten von Raupenfahrzeugen, insbesondere solche für die Skipistenpflege, mit einem Stegkörper, der eine im Querschnitt im wesentlichen U-förmige Basis auf Verbindungsschenkel und zwei mit diesem über eine Abknickkante verbundenen U-Schenkeln aufweist, welche aufeinander zu laufen und gegenüberliegend zum Verbindungsschenkel unter Bildung eines Endstücks des Stegkörpers enden, wobei der Abknickkante eine vom Verbindungsschenkel im wesentlichen auswärts und nach oben in Richtung Endstück gekrümmt verlaufende Abrollwulst zugeordnet ist.

Kettenstege sind aus DE 90 06 183 U1 und DE 29 602 940 U1 des gleichen Anmelders bekannt. Der Kettensteg ist aus einem sich quer zur Laufkette erstreckenden Profil gebildet und wird an der Laufkette in der Regel lösbar befestigt. Nach der Befestigung stehen die Endstücke im wesentlichen senkrecht von der Laufkette ab und dienen zum zumindest teilweisen Eingreifen in einen Untergrund, auf dem sich das Raupenfahrzeug bewegt.

Bewegt sich das Raupenfahrzeug über den Untergrund, treten Abknickungen der gummiartigen Laufkette im Bereich der Abknickkanten zwischen U-Schenkeln und Verbindungsschenkel auf. Aufgrund dieser Abknickungen ergeben sich nach mehr oder weniger langer Laufzeit Beschädigungen der Laufkette aufgrund des wiederholten Knickens der Laufkette um die Abknickkante.

Aus der US 5,201.574 geht ein Kettensteg hervor, der einen U-förmigen Querschnitt mit zwei miteinander verbundenen U-Schenkeln aufweist und einen Hohlraum zur Aufnahme einer mit mehreren Schraubmuttern versehenen Halteleiste bildet. Die Halteleiste ermöglicht in Wirkverbindung mit einer gegenüberliegend angeordneten Unterlegleiste eine Befestigung des Kettensteges mittels Schrauben an einer als flexibles Band ausgeführten Laufkette. Dem Kettensteg kann eine Unterlegleiste zugordnet werden, die wie die gegenüberliegend angeordnete Unterlegleiste mit einer von der Laufkette abweisend ausgerichteten Krümmung in der Art eines Abrollwulstes versehen ist, so dass die Abknickung der Laufkette reduziert werden kann.

Dem Anmeldungsgegenstand liegt daher die Aufgabe zugrunde, einen Kettensteg der eingangs genannten Art dahingehend zu verbessern, daß dieser bei einfacher und kostengünstiger Konstruktion eine längere Lebensdauer der Laufkette ermöglicht.

Diese Aufgabe wird im Zusammenhang mit den Merkmalen des Oberbegriffs des Anspruchs 1 dadurch gelöst, daß die Abrollwulst durch eine Verbreiterung am unteren Ende der U-förmigen Basis einteilig mit dem Stegkörper ausgebildet ist. Dadurch ist die aus dem Stand der Technik bekannte, durch das senkrechte Aufeinandertreffen von Verbindungsschenkel und U-Schenkel gebildete Abknickkante in einen nach außen und oben vorstehenden Abrollwulst erweitert. Bei Bewegung des Raupenfahrzeugs wird die Laufkette daher nicht mehr entlang der Abknickkante abgeknickt, sondern wird entlang des Abrollwulstes gekrümmt. Dadurch ergeben sich erheblich weniger Belastungen der Laufkette und in einfacher und kostengünstiger Weise wird die Lebensdauer der Laufkette erhöht. In diesem Zusammenhang ist zu beachten, daß entsprechende Verbiegungen oder Abknickungen der Laufkette insbesondere im Bereich von Umlenkrädern auftreten, aber auch im Bereich der horizontal geführten Laufkette, wenn die Kettenstege in Richtung Laufkette gedrückt werden. Es sei angemerkt, daß der erfindungsgemäße Kettensteg sowohl für Laufketten im Winterbetrieb des Kettenfahrzeugs als auch für sogenannte "Sommerketten" einsetzbar ist.

Da ein Raupenfahrzeug in der Regel sowohl vorwärts als auch rückwärts fährt, können entsprechende Abknickungen der Laufkette relativ zum Kettensteg beidseitig zu diesem auftreten. Um dem zu begegnen, kann die Abrollwulst beidseitig zum Stegkörper ausgebildet sein.

Bei einer Abrollwulst mit einfach herzustellender Krümmung ist es denkbar, daß die Abrollwulst auf ihrer der Laufkette zur zumindest teilweisen Anlage zugeordneten Anlageseite teilkreisförmig, insbesondere viertelkreisförmig, ausgebildet ist.

Um gleiche Abbiege- bzw. Abknickbedingungen beidseitig zum Stegkörper für die Laufkette zu erhalten, kann die Abrollwulst beidseitig zum Stegkörper mit gleichem Krümmungsradius ausgebildet sein. In diesem Fall ist der Stegkörper hinsichtlich der Abrollwülste symmetrisch ausgebildet. Natürlich ist es ebenso möglich, die Abrollwülste asymmetrisch zu gestalten, falls beispielsweise das Raupenfahrzeug vorzugsweise in eine Richtung fährt.

Zur einfachen und sicheren Befestigung des Kettenstegs an der Laufkette, kann der Kettensteg gegenüberliegend zum Stegkörper ein unteres Unterlegteil aufweisen, zwischen dem und dem Stegkörper die Laufkette angeordnet ist.

Da die Laufkette auch im Bereich des unteren Unterlegteils Abbiegungen oder Abknikkungen aufweisen kann, kann das untere Unterlegteil an seinen seitlichen Enden wenigstens einen nach außen und von der Laufkette weg gekrümmte Abrollwulst aufweisen.

Um eine bessere Verbindung zwischen Kettensteg und Laufkette zu erhalten, kann das Unterlegteil auf seiner an der Laufkette anliegenden Unterseite wenigstens einen in Richtung Laufkette vorstehenden und zumindest sich teilweise in Längsrichtung des Kettenstegprofils erstreckenden Vorsprung aufweisen. Dieser greift in das elastische Material der Laufkette zumindest teilweise ein. Weiterhin kann ein solcher Vorsprung dazu dienen, ein Eindringen von Wasser, Eis oder Schnee zwischen Kettensteg und Laufkette teilweise zu verhindern. Durch dieses zwischen Kettensteg und Laufkette eintretende Material kann bei gewissen Witterungsbedingungen die Oberfläche der Laufkette angegriffen werden. Weiterhin wird die Klemmwirkung zwischen Kettensteg und Laufkette verbessert, wodurch beispielsweise eine Lochlaibung vermindert werden kann.

Beide vorangehend genannten Effekte eines solchen Vorsprungs sind noch verbesserbar, falls mehrere solcher Vorsprünge im wesentlichen parallel zueinander an der Unterseite angeordnet sind.

Eine einfache Form eines Unterlegteils ergibt sich dann, wenn dieses im wesentlichen wannenartig mit flachem Boden und seitlich zu diesen angeordneten Abrollwülsten ausgebildet ist. Wie der Stegkörper ist auch das Unterlegteil aus einem entsprechenden Profil herstellbar.

Es sei nochmals hervorgehoben, daß es günstig je nach Verwendung und Einsatzgebiet des Raupenfahrzeugs ist, wenn die Krümmungsradien der Abrollwülste an den Enden eines Unterlegteils unterschiedlich sind.

Bei direkt im Stegkörper integrierten Abrollwülsten ist es denkbar, daß der Verbindungsschenkel auf seiner der Laufkette zuweisenden Unterseite wenigstens einen Vorsprung aufweist. Dieser dient analog zu dem oder den Vorsprüngen auf der Unterseite eines Unterlegteils zum besseren Angreifen an der Laufkette und zum zumindest teilweisen Verhindern eines Eindringens von Wasser, Schnee oder Eis in diesen Bereich.

Bei im Stegkörper integriertem Randwulst ist ein einfaches Ausführungsbeispiel denkbar, bei dem der Randwulst am Stegkörper eine im wesentlichen ebene, in Richtung U-Schenkel verlaufende Oberseite aufweist. Diese kann sich senkrecht zum U-Schenkel erstrecken und über eine Endkrümmung in den U-Schenkel übergehen.

Ein besonders gutes Angreifen an der Laufkette ist denkbarerweise dadurch erreichbar, daß die Vorsprünge an der Unterseite des Verbindungsschenkels und des unteren Unterlegteils auf Lücke angeordnet sind.

Eine einfache Möglichkeit zur Befestigung des Kettenstegs ist denkbar, bei der Stegkörper und/oder unteres Unterlegteil eine Einschraubbohrung zur Befestigung des Kettenstegs an der Laufkette aufweisen.

Bezüglich der Materialien von Stegkörper und Unterlegteil sei nur darauf verwiesen, daß diese entsprechend zum Einsatzgebiet des Raupenfahrzeugs auswählbar sind. Beispielhaft sei auf Materialien wie Aluminium, Stahl oder diese enthaltende Legierungen für den Stegkörper und ebenfalls diese Materialien sowie Kunststoff bezüglich der Unterlegteile verwiesen. Werkstoffe mit ähnlichen Eigenschaften sind allerdings genauso für Stegkörper und/oder Unterlegteil verwendbar.

Im folgenden werden vorteilhafte Ausführungsbeispiele der Erfindung anhand der in der Zeichnung beigefügten Figuren näher erläutert.

Es zeigen:
- Fig. 1: einen Querschnitt durch einen Kettensteg gemäß erstem nicht zur Erfindung gehörenden Ausführungsbeispiel;
- Fig. 2: einen Querschnitt analog zu Fig. 1 durch ein zweites nicht zur Erfindung gehörendes Ausführungsfrbeispiel;
- Fig. 3: einen Querschnitt analog zu Fig. 1 durch ein Ausführungsbeispiel der Erfindung;
- Fig. 4: einen Querschnitt durch ein Unterlegteil, und
- Fig. 5: einen Querschnitt analog zu Fig. 4 durch ein weiteres Ausführungsbeispiel eines Unterlegteils.

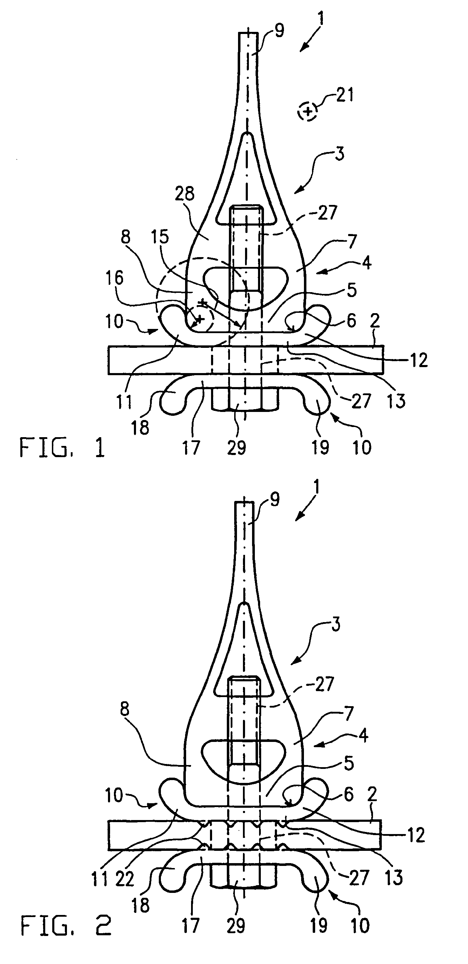

Fig. 1 zeigt einen Querschnitt durch einem Kettensteg 1. Dieser ist aus einem Profil gebildet, das sich quer zu einer Laufkette 2 eines nicht dargestellten Raupenfahrzeugs erstreckt. Der Kettensteg weist einen Stegkörper 3 und zu seiner Befestigung an der Laufkette 2 zumindest ein unteres Unterlegteil 17 und gegebenenfalls ein oberes Unterlegteil 13 auf.

Der Stegkörper 3 umfaßt eine im Querschnitt im wesentlichen U-förmige Basis 4 aus einem Verbindungsschenkel 5 und von diesem nach oben abstehenden U-Schenkeln 7, 8. Der Verbindungsschenkel 5 ist mit den U-Schenkeln 7, 8 über eine Abknickkante 6 verbunden, der ein relativ kleiner Krümmungsradius 16 zuordbar ist. Die U-Schenkel 7, 8 erstrecken sich anschließend an den Verbindungsschenkel 5 im wesentlichen senkrecht zu diesem nach oben und laufen anschließend aufeinander zu unter Bildung eines Endstücks 9 des Stegkörpers 3. Zwischen den U-Schenkeln 7, 8 können einer oder auch mehrere beispielsweise auch fachwerkartig angeordnete Zwischenschenkel 28 angeordnet sein.

Zur Befestigung des Stegkörpers 3 und der Unterlegteile 13, 17 an der Laufkette 2 weisen diese Einschraubbohrungen 27 auf, in die beispielsweise eine Schraube 29 von seiten des unteren Unterlegteils 17 her einschraubbar ist.

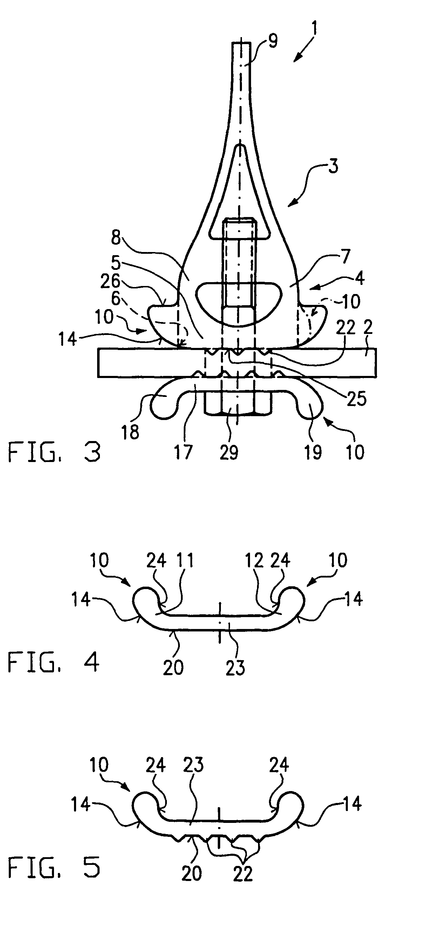

Ein unteres Ende des Stegkörpers 3 und insbesondere der Verbindungsschenkel 5 sind im wesentlichen innerhalb des wannenförmigen, oberen Unterlegteils 13 angeordnet. Dieses weist einen flachen auf der Laufkette 2 aufliegenden Boden auf und an den seitlichen Enden 11, 12 des Unterlegteils 13 sind Abrollwülste 10 ausgebildet. Diese sind relativ zum Boden 23, siehe beispielsweise Fig. 4 und 5, auswärts und nach oben gekrümmt und umfassen die Abknickkanten 6. Die Krümmung der Abrollwülste 10 ist auf seiten einer der Laufkette 2 zuweisenden Anlageseite 14, siehe Fig. 4 und 5, insbesondere teilkreisförmig gekrümmt. Bei den dargestellten Ausführungsbeispielen entspricht die teilkreisförmige Krümmung in etwa einem Viertelkreis. Der dieser Krümmung zugeordnete Krümmungsradius 15 ist größer als der der Abknickkante 6 zugeordnete Krümmungsradius 16.

Das untere Unterlegteil 17 weist analog an seinen seitlichen Enden 18, 19 Abrollwülste 10 auf. Oberes und unteres Unterlegteil 13, 17 können gleichartig ausgebildet sein. Nicht dargestellt sind Ausführungsbeispiele, bei denen die Krümmungsradien der verschiedenen Abrollwülste eines Unterlegteils oder auch von oberem und unterem Unterlegteil unterschiedlich und die Abrollwülste 10 unterschiedlich geformt sind.

Bei den folgenden Ausführungsbeispielen sind gleiche Teile durch gleiche Bezugszeichen gekennzeichnet und werden nur noch teilweise erwähnt.

In Fig. 2 ist ein Querschnitt analog zu Fig. 1 durch einen weiteren Kettensteg 1 dargestellt. Dieser unterscheidet sich vom Ausführungsbeispiel nach Fig. 1 insbesondere dadurch, daß an einer auf der Laufkette 2 aufliegenden Unterseite von oberem oder unterem Unterlegteil 13, 17 Vorsprünge 22 angeordnet sind. Diese erstrecken sich in Längsrichtung 21, siehe Fig. 1, des Kettenstegprofils. Die Längsrichtung 21 steht senkrecht auf der Figurenebene.

In Fig. 2 sind vier parallel zueinander angeordnete Vorsprünge 22 an den beiden Unterlegteilen 13, 17 ausgebildet, wodurch sich je nach Form der Vorsprünge eine gewellte, geriffelte, gerippte oder andersartig strukturierte Unterseite der Unterlegteile ergibt.

In Fig. 3 ist ein Querschnitt analog zu Fig. 1 durch ein zur Erfindung gehörendes Ausführungsbeispiel dargestellt. Dieses unterscheidet sich von den beiden vorangehenden nicht zur Erfindung gehörenden Ausführungsbeispielen dadurch, daß die Abrollwülste 10 im Stegkörper 3 integriert sind. Die Abrollwülste 10 sind im wesentlichen durch eine entsprechende Verbreiterung am unteren Ende der U-förmigen Basis 4 gebildet mit entsprechend zu den vorherigen Ausführungsbeispielen gekrümmter Anlageseite 14. In Fig. 3 ist gestrichelt der an sich bekannte Verlauf der U-Schenkel 7, 8 in Richtung Verbindungsschenkel 5 dargestellt, siehe auch Fig. 1 und 2, wobei sich an der Verbindung von U-Schenkeln und Verbindungsschenkeln die Abknickkante 6 bildet. Es ist deutlich erkennbar, daß durch die Anordnung der Abrollwülste 10 gegenüber der Abknickkante 6 eine erheblich geringere Biegung oder Abknickung der Laufkette 2 insbesondere im Bereich von Umlenkrädern oder bei einer Verbiegung der Laufkette 2 durch eine Belastung über den Kettensteg 1 ergibt.

In Fig. 3 ist weiterhin dargestellt, daß die Abrollwülste 10 nicht symmetrisch aufgebaut sein müssen. Ein Abrollwulst kann auch gemäß strichpunktierter Linie ausgebildet sein. Dies gilt analog für beide Abrollwülste des oberen Unterlegteils oder auch für die Abrollwülste des unteren Unterlegteils 17. Weiterhin besteht die Möglichkeit, daß zumindest eine Abrollwulst mit noch größerem Krümmungsradius ausgebildet ist, so daß sich dadurch gleichzeitig eine gewisse Vergrößerung der Auflagefläche von Stegkörper 3 bzw. Unterlegteil 13, 17 relativ zur Laufkette 2 ergibt.

Die Abrollwülste 10 nach Fig. 3 weisen eine im wesentlichen ebene Oberseite 26 auf, die in Richtung U-Schenkel 7, 8 verläuft und dort über eine nach oben in Richtung Endstück 9 verlaufende Krümmung in diese übergeht.

Auf einer Unterseite 25 des Stegkörpers 3 bzw. des Verbindungsschenkels 5 sind analog zum Ausführungsbeispiel nach Fig. 2 Vorsprünge 22 angeordnet. In diesem Fall sind die Vorsprünge 22 auf Lücke zu den entsprechenden Vorsprüngen am unteren Unterlegteil 17 angeordnet. Eine solche Anordnung der Vorsprünge ist auch beim Ausführungsbeispiel nach Fig. 2 möglich. Es ist selbstverständlich, daß entsprechende Vorsprünge 22 beispielsweise auch nur einseitig zur Laufkette 2 vorgesehen sein können.

In den Fig. 4 und 5 sind die Unterlegteile 13, 17 separat ohne Laufkette 2 und Stegkörper 3 dargestellt. Es sei in diesem Zusammenhang noch darauf hingewiesen, daß eine Innenseite 24 der Abrollwülste 10 so ausgebildet sein kann, daß diese an einer Außenseite der U-Schenkel 7, 8 anliegt und entsprechend der Stegkörper 3 formschlüssig von zumindest dem oberen Unterlegteil 13 aufgenommen ist. Das Unterlegteil nach Fig. 4 entspricht dabei oberem bzw. unterem Unterlegteil 13, 17 nach Fig. 1 und das Unterlegteil nach Fig. 5 entspricht dabei oberem und unterem Unterlegteil 13, 17 nach Fig. 2 bzw. unterem Unterlegteil 17 nach Fig. 3.

## Patentansprüche

1. Kettensteg (1) für Laufketten (2) von Raupenfahrzeugen, insbesondere solche für die Skipistenpflege, mit einem Stegkörper (3), der eine im Querschnitt im wesentlichen U-förmige Basis (4) aus Verbindungsschenkel (5) und zwei mit diesem über eine Abknickkante (6) verbundenen U-Schenkeln (7,8) aufweist, welche aufeinander zu laufen und gegenüberliegend zum Verbindungsschenkel (5) unter Bildung eines Endstücks (9) des Stegkörpers (3) enden, wobei der Abknickkante (6) eine vom Verbindungsschenkel (5) im wesentlichen auswärts und nach oben in Richtung Endstück (9) gekrümmt verlaufende Abrollwulst zugeordnet ist,
**dadurch gekennzeichnet, daß** die Abrollwulst (10) durch eine Verbreiterung am unteren Ende der U-förmigen Basis einteilig mit dem Stegkörper (3) ausgebildet ist.

2. Kettensteg nach Anspruch 1, **dadurch gekennzeichnet, daß** die Abrollwulst (10) beidseitig zum Stegkörper (3) ausgebildet ist.

3. Kettensteg nach wenigstens einem der vorangehenden Ansprüche, **dadurch gekennzeichnet, daß** die Abrollwulst (10) auf ihrer der Laufkette (2) zur zumindest teilweisen Anlage zugeordneten Anlageseite (14) teilkreisförmig, insbesondere viertelkreisförmig, ausgebildet ist.

4. Kettensteg nach wenigstens einem der vorangehenden Ansprüche, **dadurch gekennzeichnet, daß** die Abrollwulst (10) beidseitig zum Stegkörper (3) mit gleichem Krümmungsradius (15) ausgebildet ist.

5. Kettensteg nach wenigstens einem der vorangehenden Ansprüche, **dadurch gekennzeichnet, daß** der Kettensteg (1) gegenüberliegend zum Stegkörper (3) ein unteres Unterlegteil (17) aufweist, zwischen dem und dem Stegkörper (3) die Laufkette (2) angeordnet ist.

6. Kettensteg nach wenigstens einem der vorangehenden Ansprüche, **dadurch gekennzeichnet, daß** das untere Unterlegteil (17) an seinen seitlichen Enden (18,19) wenigstens eine nach außen und von der Laufkette (2) weggekrümmte Abrollwulst (10) aufweist.

7. Kettensteg nach wenigstens einem der vorangehenden Ansprüche, **dadurch gekennzeichnet, daß** das Unterlegteil (17) auf seiner an der Laufkette (2) anliegenden Unterseite (20) wenigstens einen in Richtung Laufkette (2) vorstehenden und zumindest sich teilweise in Längsrichtung (21) eines Kettenstegprofils erstrekkenden Vorsprung (22) aufweist.

8. Kettensteg nach wenigstens einem der vorangehenden Ansprüche, **dadurch gekennzeichnet, daß** mehrere Vorsprünge (22) im wesentlichen parallel zueinander an der Unterseite (20) angeordnet sind.

9. Kettensteg nach wenigstens einem der vorangehenden Ansprüche, **dadurch gekennzeichnet, daß** das Unterlegteil (17) im wesentlichen wannenartig mit flachem Boden (23) und seitlich zu diesem angeordneten Abrollwülsten (10) ausgebildet ist.

10. Kettensteg nach wenigstens einem der vorangehenden Ansprüche, **dadurch gekennzeichnet, daß** der Krümmungsradius (15) der Abrollwülste (10) an den Enden (11,12;18,19) eines Unterlegteils (17) unterschiedlich ist.

11. Kettensteg nach wenigstens einem der vorangehenden Ansprüche, **dadurch gekennzeichnet, daß** der Verbindungsschenkel (5) auf seiner der Laufkette (2) zuweisenden Unterseite (25) wenigstens einen Vorsprung (22) aufweist.

12. Kettensteg nach wenigstens einem der vorangehenden Ansprüche, **dadurch gekennzeichnet, daß** die Randwulst (10) am Stegkörper (3) eine im wesentlichen ebene und in Richtung U-Schenkel (7,8) verlaufende Oberseite (26) aufweist.

13. Kettensteg nach wenigstens einem der vorangehenden Ansprüche, **dadurch gekennzeichnet, daß** die Vorsprünge (22) an der Unterseite (25) des Verbindungsschenkels (5) bzw. des oberen Unterlegteils (13) und des unteren Unterlegteils (17) auf Lücke angeordnet sind.

14. Kettensteg nach wenigstens einem der vorangehenden Ansprüche, **dadurch gekennzeichnet, daß** Stegkörper (3) und/oder unteres Unterlegteil (17) eine Einschraubbohrungen (27) zur Befestigung des Kettenstegs (1) an der Laufkette (2) aufweisen.

## Claims

1. Grouser (1) for the drive tracks (2) of tracked vehicles, in particular those used for the maintenance of ski runs, comprising a grouser body (3) which exhibits a base (4) of predominantly U-shaped cross-section consisting of connecting leg (5) and two U-legs (7,8) connected with this via a kinked edge and which converge to form a terminal element (9) of the grouser body (3) opposite the connecting leg (5), where the kinked edge (6) is associated with a roll-off shoulder which extends substantially outward and upward from the connecting leg (5) and which arches in the direction of the terminal element (9), **characterised in that** the roll-off shoulder (10) is formed in one piece with the grouser body (3) via a widening at the lower end of the U-shaped base.

2. Grouser according to Claim 1, **characterised in that** the roll-off shoulder (10) is formed on both sides of the grouser body (3).

3. Grouser according to at least one of the previous claims, **characterised in that** the roll-off shoulder (10) is formed on its contact side (14) which at least partly faces toward the drive track (2) as part of a circle, particularly in the form of a quarter-circle.

4. Grouser according to at least one of the previous claims, **characterised in that** the roll-off shoulder (10) is formed on both sides of the grouser body (3) with the same radius of curvature (15).

5. Grouser according to at least one of the previous claims, **characterised in that** the grouser (1) exhibits a lower support component (17) positioned opposite to the grouser body (3) such that the drive track (2) is positioned between it and the grouser body (3).

6. Grouser according to at least one of the previous claims, **characterised in that** the lower support component (17) exhibits at least one roll-off shoulder (10) on its lateral ends (18, 19) which is curved outward and away from the drive track (2).

7. Grouser according to at least one of the previous claims, **characterised in that** the support component (17) on its underside (20) in contact with the drive track (2) exhibits at least one projection (22) protruding in the direction of the drive track (2) and at least partially extending in the longitudinal direction (21) of a grouser profile.

8. Grouser according to at least one of the previous claims, **characterised in that** several projections (22) essentially parallel to one another are positioned on the underside (20).

9. Grouser according to at least one of the previous claims, **characterised in that** the support component (17) is essentially tub-shaped with a flat base (23) and is formed with laterally arranged roll-off shoulders (10).

10. Grouser according to at least one of the previous claims, **characterised in that** the radius of curvature (15) of the roll-off shoulders (10) is different at the ends (11, 12; 18, 19) of a support component (17).

11. Grouser according to at least one of the previous claims, **characterised in that** the connecting leg (5) exhibits at least one projection (22) on its underside (25) facing the drive track (2).

12. Grouser according to at least one of the previous claims, **characterised in that** the roll-off shoulder (10) on the grouser body (3) exhibits an upper side (26) which is essentially flat and which trends in the direction of the U-legs (7, 8).

13. Grouser according to at least one of the previous claims, **characterised in that** the projections (22) on the underside (25) of the connecting leg (5) or of the upper support component (13) and of the lower support component (17) are positioned offset from each other.

14. Grouser according to at least one of the previous claims, **characterised in that** the grouser body (3) and/or the lower support component (17) exhibit threaded holes (27) for attachment of the grouser (1) to the drive track (2).

## Revendications

1. Etai (1) pour chenilles (2) de véhicules sur chenilles, notamment de tels véhicules pour l'entretien de pistes de ski, comprenant un corps d'étai (3) qui présente une base (4) de section essentiellement en forme de U, composée d'un côté de raccordement (5) et de deux côtés en U (7, 8) raccordés à celui-ci par l'intermédiaire d'un bord courbé (6), lesquels vont l'un vers l'autre et se terminent à l'opposé du côté de raccordement (5) en formant une pièce terminale (9) du corps d'étai (3), un bourrelet de roulement, s'étendant de manière courbée essentiellement vers l'extérieur et vers le haut en direction de la pièce terminale (9), étant associé au bord courbé (6), **caractérisé en ce que** le bourrelet de roulement (10) est exécuté d'une seule pièce avec le corps d'étai (3) par un élargissement sur l'extrémité inférieure de la base en forme de U.

2. Etai selon la revendication 1, **caractérisé en ce que** le bourrelet de roulement (10) est exécuté de chaque côté par rapport au corps d'étai (3).

3. Etai selon au moins l'une quelconque des revendications précédentes, **caractérisé en ce que** le bourrelet de roulement (10), sur son côté d'application (14) associé à la chenille (2) pour son application au moins partielle, est exécuté en forme de cercle partiel, notamment en forme de quart de cercle.

4. Etai selon au moins l'une quelconque des revendications précédentes, **caractérisé en ce que** le bourrelet de roulement (10) est exécuté avec le même rayon de courbure (15) de chaque côté par rapport au corps d'étai (3).

5. Etai selon au moins l'une quelconque des revendications précédentes, **caractérisé en ce que** l'étai (1), à l'opposé du corps d'étai (3), présente une pièce de calage inférieure (17), entre laquelle et le corps d'étai (3) est disposée la chenille (2).

6. Etai selon au moins l'une quelconque des revendications précédentes, **caractérisé en ce que** la pièce de calage inférieure (17), sur ses extrémités latérales (18, 19), présente au moins un bourrelet de roulement (10) courbé vers l'extérieur et s'éloignant de la chenille (2).

7. Etai selon au moins l'une quelconque des revendications précédentes, **caractérisé en ce que** la pièce de calage inférieure (17), sur son côté inférieur (20) adjacent à la chenille (2), présente au moins une saillie (22) dépassant en direction de la chenille (2) et s'étendant au moins en partie en sens longitudinal (21) d'un profilé de l'étai.

8. Etai selon au moins l'une quelconque des revendications précédentes, **caractérisé en ce que** plusieurs saillies (22) sont disposées sur le côté inférieur (20) essentiellement parallèlement les unes aux autres.

9. Etai selon au moins l'une quelconque des revendications précédentes, **caractérisé en ce que** la pièce de calage (17) est essentiellement exécutée en forme de cuve à fond plat (23) et en étant disposée latéralement par rapport à ce bourrelet de roulement (10).

10. Etai selon au moins l'une quelconque des revendications précédentes, **caractérisé en ce que** le rayon de courbure (15) des bourrelets de roulement (10) est différent aux extrémités (11, 12 ; 18, 19) d'une pièce de calage (17).

11. Etai selon au moins l'une quelconque des revendications précédentes, **caractérisé en ce que** le côté de raccordement (5) présente au moins une saillie (22) sur son côté inférieur (25) tourné vers la chenille (2).

12. Etai selon au moins l'une quelconque des revendications précédentes, **caractérisé en ce que** le bourrelet de bordure (10) sur le corps d'étai (3) présente un côté supérieur (26) essentiellement plan et s'étendant en direction des côtés en U (7, 8).

13. Etai selon au moins l'une quelconque des revendications précédentes, **caractérisé en ce que** les saillies (22) sont disposées à intervalles sur le côté inférieur (25) du côté de raccordement (5) et de la pièce de calage supérieure (13) et de la pièce de calage inférieure (17).

14. Etai selon au moins l'une quelconque des revendications précédentes, **caractérisé en ce que** le corps d'étai (3) et/ou la pièce de calage inférieure (17) présentent un alésage de vissage (27) pour fixer l'étai (1) sur la chenille (2).
